# EUROPEAN PATENT SPECIFICATION

(11) **EP 0 370 534 B1**
(45) Date of publication and mention of the grant of the patent: **01.12.1993**
(21) Application number: 89201332.7
(22) Date of filing: 24.05.1989
(51) Int. Cl.: H01M 4/14, H01M 10/12, H01M 10/42, H01M 16/00, H01M 2/20

(54) **Improvements in or relating to battery systems**
Batteriesysteme
Systèmes de batteries

(30) Priority: 21.10.1988 NZ 226656
(43) Date of publication of application: 30.05.1990
(73) Proprietor: Witehira, Pita, Hamilton (NZ)
(72) Inventor: Witehira, Pita, Hamilton (NZ)
(74) Representative: de Bruijn, Leendert C.

(56) References cited:
- WO-A-86/00759
- DE-A- 3 044 830
- FR-A- 368 454
- FR-A- 1 246 427
- FR-A- 1 270 691
- FR-A- 2 192 386
- GB-A- 525 374
- GB-A- 2 085 645
- US-A- 3 475 221
- US-A- 3 883 368
- US-A- 4 204 036
- US-A- 4 546 053
- PATENT ABSTRACTS OF JAPAN, vol. 11, no. 309 (E-547)[2756], 8th October 1987; & JP-A-62 103 975 (SHIN KOBE ELECTRIC MACH. CO., LTD) 14-05-1987
- IDEM
- PATENT ABSTRACTS OF JAPAN, vol. 9, no. 318 (E-366)[2041], 13th December 1985; & JP-A-60 150 556 (NIHON DENCHI K.K.) 08-08-1985
- PATENT ABSTRACTS OF JAPAN, vol. 11, no. 4 (E-468)[2451], 7th January 1987; & JP-A-61 179 068 (YUASA BATTERY CO., LTD) 11-08-1986
- CHEMICAL ABSTRACTS, vol. 108, no. 8, February 1988, page 198, abstract no. 59455d, Columbus, Ohio, US; & IN-A-159 192 (AMCO BATTERIES LTD) 11-04-1987
- PATENT ABSTRACTS OF JAPAN, vol. 7, no. 45 (E-160)[1190], 23rd February 1983; & JP-A-57 197 751 (NIPPON DENSO K.K.) 04-12-1982

## Description

The invention relates to a vehicle circuit system comprising a battery, said battery comprising a container having a plurality of cells, said plurality of cells including at least two positive terminal cells and at least one negative terminal cell, each cell containing a plurality of alternating positive and negative electrode plates separated from each other and constituting a cell element stack, each of said plates including active material, the positive electrode plates of the cell element stack in each positive terminal cell being electrically connected to a positive terminal, the negative electrode plates of the cell element stack in the or each negative terminal cell being electrically connected to one negative terminal, each electrode plate of each cell element other than a said terminal cell being electrically connected in series to the electrode plate of opposite polarity in an adjoining cell, the cells of each series of connections having separate positive terminals; and an electrolyte in contact with the positive and negative electrode plates in each cell.

Such a vehicle electric circuit is known from US-A-3,475,221 that describes a storage battery that might be applied in automobiles, the battery containing two sub-batteries in parallel, both sub-batteries having one negative pole and a positive pole. The electrode plates are submerged into the same electrolyte. The electrode elements in both sub-batteries are constructed in the same manner. The surface areas of the electrode plates of the first cell differ from those of the second cell.

Conventional automotive Starting, Lighting and Ignition batteries, hereinafter referred to as SLI batteries, consist generally of six 2.2 volt Lead Acid cells connected in series. It is a primary function of the automotive battery to provide sufficient high electric current at short intervals to crank the internal combustion engine in order that it may start. The battery must also provide current to the coil in order to supply ignition at the spark plugs.

Another important function which must also be provided is that of reserve current to provide lighting and ignition for the vehicle if the vehicle's generator is not working.

The current requirements of the starter motor are vastly different from those of the vehicle's auxiliaries, such as ignition and lighting. On the one hand, cranking requires large amounts of current for a relatively short duration as the starter motor cranks the internal combustion engine against the compression of the cylinders. Ignition and other vehicle auxiliaries, however, require lower current rates but for longer periods of time.

The conventional SLI battery system is therefore designed first to provide sufficient cranking power, secondly to provide current to the ignition and coil and thirdly to provide current to the vehicle's auxiliaries whilst the generator is not working. One other function is to act as a voltage load leveller as part of the vehicle's electrical circuits whilst the generator is operating.

The conventional SLI battery system is an advanced version of the original Plante reversible cell. During it's development, the basic principles utilized by Plante have still been retained up to the present time. That is, the battery consists of a series of cells having two opposing electrodes. The cells produce 2.2 volts generally. This configuration has proved to be suitable as a starter battery.

When batteries were first adapted for the supply of starting current, the automobile was quite different to what it is at present. Indeed, the motor vehicle has changed quite markedly in comparison to the battery. It is no longer as important to supply just cranking current for the vehicle. The modern vehicle is equipped with many electrical and electronic devices which present a major contrast in auxiliary current requirements for the battery.

Vehicle manufactures, whilst incorporating the various extra auxiliaries into the vehicle, are merely responding to consumer demands. These extra auxiliaries place further demands on a battery system which is becoming more and more obsolete because it was always designed primarily as a starting battery. Indeed, the starting function is still the major function of the battery but it is now obvious that changes in automobile designs must also demand changes in battery design to keep pace with consumer demands for more auxiliary power.

Attempts to overcome these problems have been made by a number of people. Thus US patent specification 406822 in the name Dey shows a battery which is divided into two cell groups by an internal dividing plate. US patent specification 1924959 in the name of Patterson shows four cells two of which are in series and two of which can be between parallel or series combinations by the throwing of a switch. The cells are totally separate. US patent specification 3029301 in the name of Strider shows a construction in which two battery parts are provided in series so that six and twelve volt voltage sources can be provided. US specification 3242009 in the name of Schilke shows the construction in which two battery parts are provided but these are used to provide a number of different voltages.

US patent specification 3758345 in the name of Toth shows a construction in which a small auxiliary battery is provided in a shaped recess formed in the main plate. US patent specification 3883368 in the name of Kordesch shows a construction in which two or more current rates are provided by the use of different types of electrode and, US patent specification 4684580 in the name of Cramer shows a construction wherein the casing for the battery has a pocket or recess into which a second or auxiliary battery can be provided. None of these specifications show a construction wherein the problems of the large but short duration current required for cranking and the lower but longer duration demand required by the auxiliaries is able to be coped with in a single battery construction. Specification 3883368 does indicate a battery which is able to cope with different current rates but this is only achieved by the use of different types of electrodes. Such an approach is impractical as a SLI battery. Specification 4684580 in the name of Cramer could provide a construction in which different current draw offs are provided but this is achieved only by the use of two quite separate and distinct batteries, one of which is able to be mounted to the other. Such double battery constructions require extensive changes to be made to the vehicle electrical architecture, and are expensive to manufacture.

It is therefore an object of the present invention to provide an electric circuit for vehicles in general which will obviate or minimize the foregoing disadvantages.

Accordingly, in the vehicle electric circuit the cells of each series of connections are electrically connected to only one common negative terminal and the electrode plates of the series are of thicker plate material than are the electrode plates of the other series; the electrode plates of the series being capable of slower deeper discharge as is required for the vehicle's auxiliary power circuits, the electrode plates of the other series are capable of rapid shallow discharge as is required for internal combustion engine starting, said vehicle electric system furthermore comprising first a heavy current conductor cable connected to the battery negative terminal and earthed to said vehicle, second a current conductor cable connected to one or more positive terminals of said battery and connected to a current first switch, said current switch being connected to the electric starter motor of said vehicle, third a current conductor cable connected to one or more of the battery's positive terminals and to the auxiliary circuits of said vehicle, fourth a current electrical conductor cable connected to one positive terminal not engaged by said second current connector cable, said fourth current conductor cable being in common circuit with the generator circuit line of said vehicle, then a second switch, fifth a current conductor cable from said second switch connected to said terminal engaged by said second current conductor cable.

This invention therefore provides for a vehicle electric circuit comprising a battery having two sets of cells arranged in series parallel, thus providing dual or multi current variations at the positive terminals. That series of cells having the thinner positive plates provide high current from the connected positive terminal for short durations. The other series of cells, having thicker positive plates, have less plates per volume space, however the current capacity is equal to the cells having thinner plates, during longer slower discharges of the battery.

The present invention therefore provides the vehicle manufacturers and owner with a vehicle electric circuit comprising a dual or multi current battery that for cranking purposes will provide high current flows through the cells having thin positive plates with this high current available for shorter durations. A lower but longer current flow is also available from the cells having thicker positive plates. Whilst both sets of cells can be connected electrically for cranking purposes, only the cells having the thicker plates are connected electrically to the automobiles auxiliary circuits, thus providing for slower and longer discharge periods.

During recharging of the cells, all cells are connected electrically and thus the reverse cycle is occurring as in a conventional storage battery. This is made possible because all cells share a common negative terminal to earth.

In the following more detailed description of the invention, reference will be made to the accompanying drawings in which;
Fig 1 is a side elevation of the battery sectioned through two cell compartments.
Fig 2 is a perspective view of the monobloc injection moulding of the battery showing internal partitions.
Fig 3 is an enlargement of the cells having thicker layered but less positive plates showing intercell connections.
Figure 4 is an end elevation of the battery sectioned through the positive terminals.
Fig 5 is a end elevation of the battery sectioned through the negative terminal.
Fig 6 is a top plane view of the battery with lid removed showing cells arranged in series parallel.
Fig 7 is a perspective illustration of a layered electrode plate structure.
Fig 8 is a diagrammatic view of an electrical layout usable with the battery of the invention.
Fig 9 is a diagrammatic view of an alternative electrical layout.

### Detailed Description Of Preferred Embodiment

While the invention will be described in connection with preferred embodiments, it will be understood that the invention is not intended to be limited to the preferred embodiments.

Thus, while the present invention will be described in conjunction with an SLI Automotive Battery, it should be appreciated that the invention is equally applicable to any other storage Battery application. Indeed, the present invention can be adapted to use with an absorbed electrolyte type of battery as opposed to the flooded-electrolyte battery illustrated herein.

Use of the present invention will be particularly advantageous in applications which require high rapid discharge combined with longer and slower power draw off encased within one casing and having dimensions equivalent to conventional SLI batteries.

In general, the present invention is predicated on the discovery that, by a unique combination of physical parameters, as will be discussed hereinafter, a storage battery can be provided which is characterized by dual or multiple or single current flow with the ability to maintain a minimum required rapid discharge capacity during use and or after prolonged use of auxiliary circuits which require lower and slower current flow characteristics.

This performance characteristic can be provided for within the physical parameters of a conventional battery as set forth herein. The conventional SLI battery, as previously mentioned, requires a reserve capacity to comply with International standards. The reserve capacity of the conventional battery is calculated on the basis that should a battery's capacity drop by 25% of normal, it must still be capable of cranking the internal combustion engine.

The present invention therefore sets out to overcome the problem of longer slower discharges using up the available high discharge capacity required. The present invention hereinafter describes how by weight and volume it is possible, by "optimized configuration", to achieve a dual or multi current system within standardized battery container sizes. In this instance, advantages of the present invention are in cost savings and compatibility with conventional batteries.

The present invention can also be characterized in relation to Total Capacity when by electrical switching, it is possible to obtain full use of all active material within the battery for usual day to day use as a conventional SLI battery. By electrical circuit design, it is also possible to isolate that section of the battery characterized by plate design described herein as best suited for slower and longer current drawoff than cranking requires. By switch or circuit design, the present invention also prevents use of the rapid discharge capacity by the auxiliary circuits within an automobile.

The present invention will show that battery durability is increased substantially by distinguishing specific current requirements within the optimized configuration.

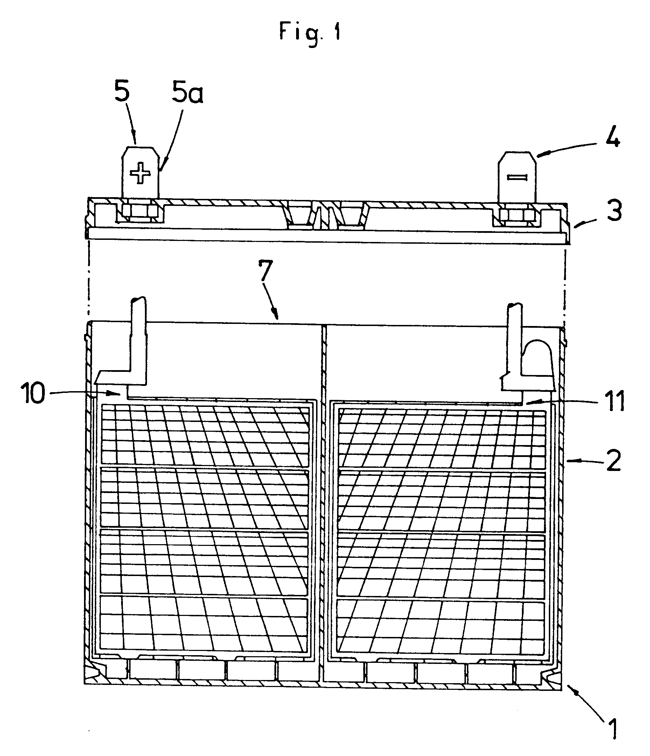

Turning now to a more detailed description of the present invention, there is shown in Figures 1 to 5 a preferred embodiment of a 12 volt 12 cell battery of the present invention.

Figure 1 shows a battery (1) with a premoulded container, (2) with cover (3) lifted which will be attached to the container by suitable means. (4) is a negative terminal post while both (5) and (5a,obscured) are positive terminal posts. While the terminal posts are illustrated as top terminals, side terminals or other terminal configurations could likewise be employed.

Each cell, as illustrated by figure 1, has a plurality of independent, alternately disposed, positive electrode plates (10) and negative electrode plates (11). The plates (10) and (11) are disposed generally perpendicularly and parallel to the partitions (7) but may also be at right angles.

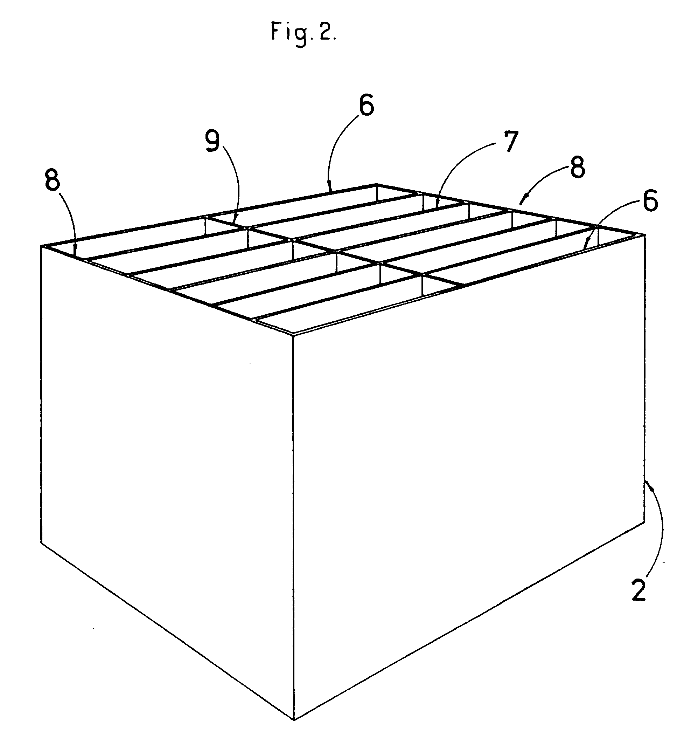

The container, as best seen in figure 2, is divided into a plurality of cell compartments by integrally formed partition walls (7) which lie essentially parallel to the end walls (6) of container (2) and at right angles to a further partition (9) which runs parallel to walls (8) thus providing 12 cell compartments within the container. Whilst illustrated as 12 cells running in parallel to walls (8), other configurations could likewise be employed.

Wall (9), for example, is not required when "absorbed" electrolyte is employed. Wall (9) is essential when flooded electrolyte is employed.

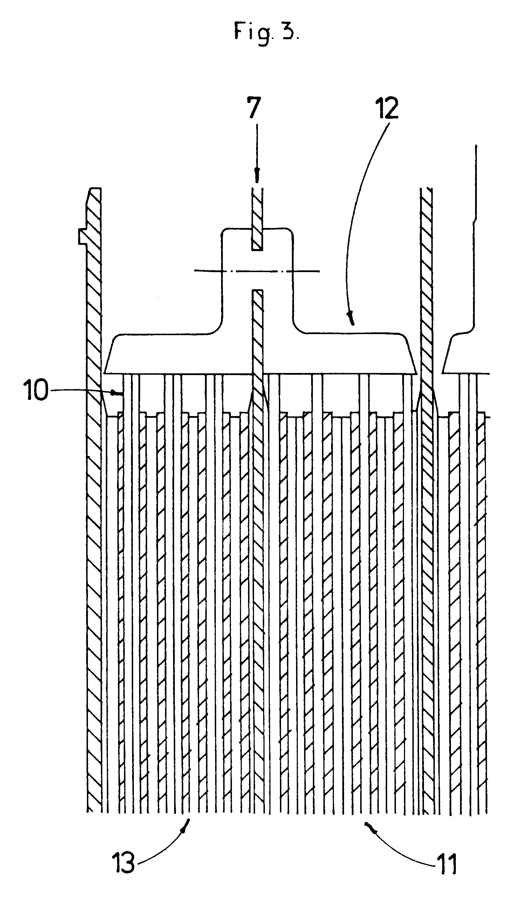

Figure 3 sets forth an example of alternative layered positive electrode plates (10) from end on and conventional negative electrode plates (11). A series connection through wall (7) is also illustrated by use of conventional lead straps (12). Separators (13) are also illustrated as in conventional flooded electrolyte cells. However, absorbed electrolyte may also be used as separators in a further aspect.

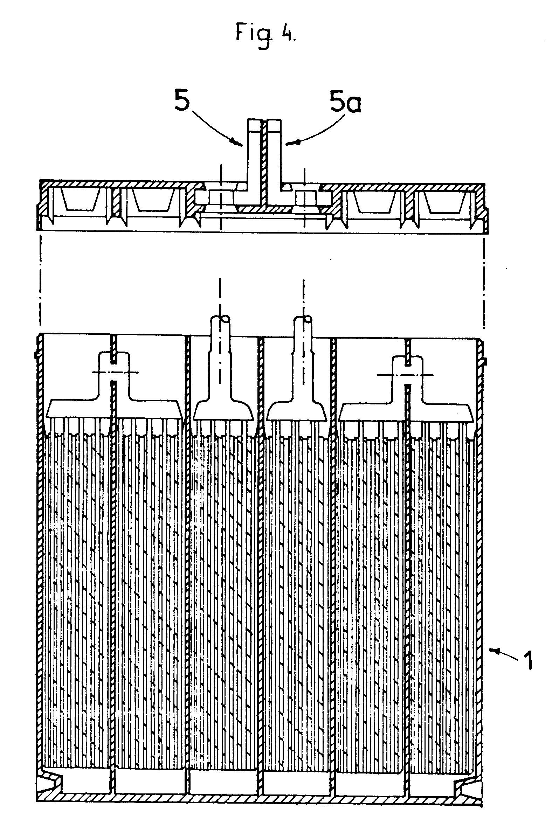

Figure 4 shows a section through the positive terminals (5) and (5a) of the present invention in a dual current configuration as separate from a multi-current configuration and indicates positive terminals (5) and (5a) in close proximity.

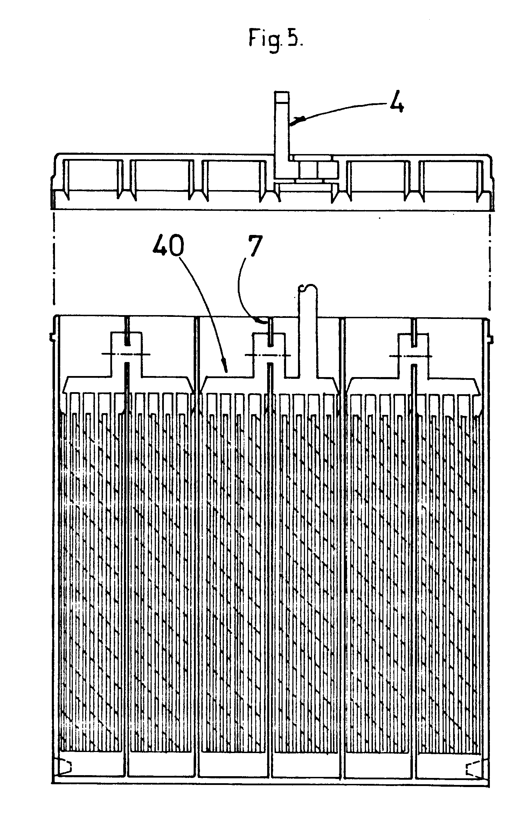

Figure 5 shows a section through the negative terminal (4) of the present invention and indicates common negative terminal connections through partition (7) by strap (40).

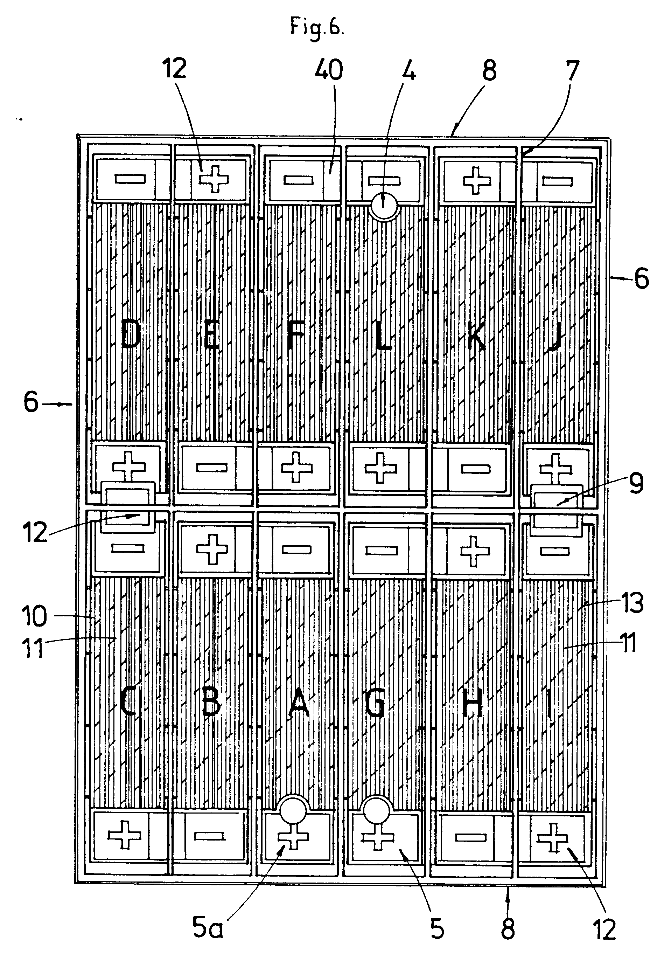

Figure 6 is an overhead view of the cell compartments indicating partitions (7)&(9), intercell connections (12) and positive connections (5) and (5a) and negative connection (4) which indicate a series parallel arrangement of cells.

In accordance with the present invention, cells (a) to (f) of figure 6 have three layered positive electrode plates (10) and conventional negative electrode plates (11). Cells (g) through (l) have four conventional positive electrode plates (13) and five conventional negative plates (11). Cells (a) to (f) are connected in series and parallel to cells (g) to (l) by straps (12). Cell (f) is connected through the partition to cell (l) by strap (40) at the negative terminal. Cells (a) and (g) show separate positive post to terminal (5) and (5a) of figure 1. Cell (l) shows a single negative post to terminal connection (4) of figure 1. Partition (9) as indicated previously is not required when absorbed electrolyte is used. Whilst it is shown here that layered electrodes are used in cells (a) to (f) inclusive, such electrodes may be used in any cell combination within the structure.

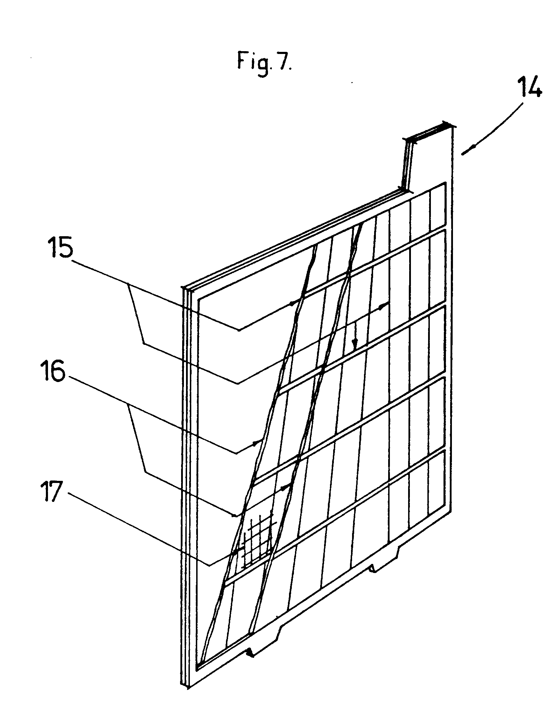

Figure 7 is a perspective view of a layered electrode plate structure which indicates a section of active materials removed for clarity of illustration. A frame (14) has a similar appearance to conventional plate structures but consists of two or more frame structures placed against each other and having grids (15) which provide current paths which also restrain the active material (16). A glass fibre mat (17) is also illustrated which is placed between the frames (14) and grids (15) prior to "pasting" over from either side of plate frames with active materials.

Capillary action, enhanced by vehicle motion, allows electrolyte accessibility to the inner depths of the active material.

Whilst it is appreciated that greater surface area of active material directly increase by proportion the high current performance of a conventional battery, the present invention provides, by use of dual or multiple layered positive electrode plates, not only high rapid discharge current when required but also longer lasting but lower electrical current when being used for auxiliary loads. The use of layered positive plates provide greater resistance to damage as a result of deep discharges that occur when the auxiliary circuits are operated for longer periods of time. The discharge/recharge cycle of a storage battery places pressure on the positive plates in particular. A conventional SLI battery is in effect a design trade-off between a deep cycle battery, which uses thick positive plates to counter the effects of deep discharges and recharge cycles, and a battery having a greater number of thinner plates to provide the maximum high current for cranking but for relatively short periods of time.

When an internal combustion engine is being cranked, the current requirements are so great that rapid discharge occurs. However, because the discharge is so rapid, generally only the electrons at the plate surface are used. Electrons deeper into the active material may not be available until the cranking draw off is stopped for a period. A second attempt at cranking will produce a further flow of current. Thicker plates require more space volume to provide larger surface area for cranking power. Thicker plates also require longer recharge cycles.

The present invention overcomes the problems of plate stress caused by longer or deeper discharges resulting from prolonged auxiliary use. It is also effective in providing surface current for rapid discharges.

The use of layered positive plates also places less recharge strain on the vehicle's generator/alternator which would be the case if thick plates are used. Thick plates as previously mentioned provide for deeper and longer discharges but also require deeper and longer recharges.

Thin layered positive plates as in the present invention not only provide for greater strength than a thick plate of equal dimensions, but also makes it easier for the electrolyte to penetrate into the active material of the plates, by capillary action.

The cell configuration shown in figure 6 is only exemplary and many other configurations could be used as the particular design is not crucial. Similarly, other multiples of plates within each cell may be employed depending on overall capacity requirements of the specifications. The combination of layered plates also may include all cells depending on the specification requirements, or more or less cells than indicated in Figure 6.

The use of thick, deep cycle plates, either in combination with layered plates or thin plates, can also be used to provide alternative current "types".

The use of layered electrodes as illustrated in Fig 7 also helps overcome the problem of active mass fall off caused by vibration during movement of a vehicle in which a battery is installed. It should be understood that the present invention is not restricted to the use of layered structures as indicated by Fig 7. Indeed, folded structures may accomplish the same effect provided that the electrode is constructed as a single unit which is electrically connected yet allows electrolyte penetration to deep within the structure by capillary assisted defussion. That is, the structure, in order to provide correct electrochemical reaction within the cell, must be constructed electrically as one electrode and must also provide electrolyte accessability to deep within the structure by providing suitable capillary tracking between each layer and by providing diffusion through perforations or pores throughout the active material.

It should also be understood that although described herein as positive electrodes, the said layered electrodes are able to be used as negative electrodes. The number of layers is not restricted and can be determined by specification.

Turning now to manufacturing costs. The present invention, as previously mentioned, is generally housed within the same dimensional parameters as an equivalent conventional SLI battery. Because the conventional battery is designed primarily as a cranking battery, emphasis has been directed to heavy intercell connectors so as to reduce resistance and thus enhance performance. The present invention, however, can provide a compromise by providing dual/multi currents at positive terminals in close proximity as indicated in Figure 3. The intercell connectors may be comparatively reduced in weight as by circuit design it is possible to avoid a voltage drop at the ignition coil, resulting in a larger ignition spark and thereby reducing the required cranking capacity.

The active material used in the present invention is equal in weight and volume to a conventional SLI battery of the same dimensions. The grids used in the present invention are, in the case of the layered configuration, moulded from pure lead. The layers of the plates, as previously discussed, creates a stronger structure thus reducing the need for additives such as antimony or calcium. In this regard, the gassing problems created by the lead additives are reduced and the present invention, though able to "deep cycle", is also able to be manufactured as a "Maintenance Free" type battery.

The elimination of complex venting plugs is therefore provided for with the present invention which utilizes an isotonic design of cell breathing system. That is, no cap is provided over the tapered filling and breathing inlet which is covered by a microporous element such as teflon tape held in place by adhesion tape as illustrated at Fig 1.

The Monobloc Injection Moulded casing, figure 2, shows one extra partition (9) as compared to a conventional battery. This partition is required in the flooded electrolyte version of the battery. The partition, although apparently requiring more plastic material, has in fact created a saving by weight of material used. Partition (9) strengthens the casing by providing lateral support. This then allows a reduction in wall and partition thicknesses. For example, a conventional battery would have external walls measuring between 2.75 mm and 3.25 mm. Internal partitions on conventional batteries of similar size measure between 1.75 mm and 2.75 mm. The present invention, in wet form, because of the lateral support provided by partition (9), reduces the required thickness of the external walls (6) and (8) of figure 2 to between 2.0 mm and 2.75 mm. Similarly, the internal partitions can be reduced to between 1.50 and 1.75 mm. The additional plastic or polypropylene required for partition (9) is more than compensated for by the reduction in the thickness of all walls and partitions.

Calculations of manufacturing costs also must include plant alterations, etc. The present invention is designed to overcome the need for any plant alterations. Indeed, the battery can be manufactured by any well established storage battery manufacturer without any noticeable or major plant alterations. The injection moulding of the casing and lid would differ from those used for conventional batteries. The injection moulding operation is normally separated from the assembly procedures, so there are no problems of integration. The present invention's injection moulding requires no new material by weight or volume, and would not cost more than between 10% and 20% of the cost of manufacturing a conventional battery. When comparing it with the practice of using two batteries in an automobile, it is of course far cheaper.

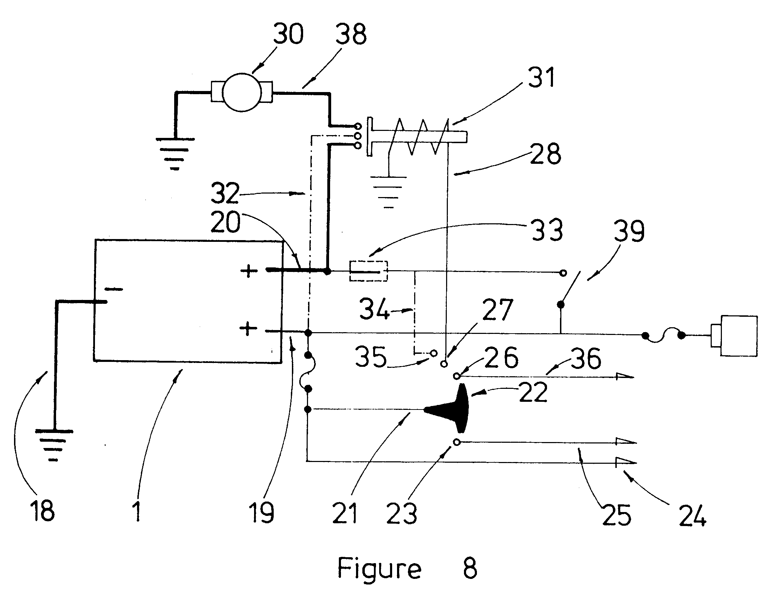

Figure 8 refers to a battery (1) of the type described herein as provided. The battery is earthed through earth connector (18). The battery provides two positive leads (19) and (20). Positive lead (19) is applied to the common terminal (21) of ignition switch (22). The ignition switch (22) may provide a spare terminal (23) which can be contacted by for example a reverse turn of the key from which extends electrical conductor (25) which may be used for example to allow a radio to play while the key is out. That is to say it can provide an electrical connection when the key is in an unlocked position. Lead (36) extending from terminal (26) is utilized for the auxiliaries and ignition circuits of the motor vehicle in which the battery (1) is to be used. The generator is connected directly to lead (19). Terminal (27) provides current through lead (28) to the solenoid (31) which is then activated to provide current to the starter motor (30) through lead (38). Lead (32) is an option and further high current lead from the second positive terminal. If this lead is provided it effectively connects the two parts of the battery in parallel thereby providing additional current capacity to the starter motor (30). When lead (32) is not provided a thermal cut off switch (33) is desirably provided. A solenoid switch can be provided in lead (34) which extends between a further terminal (35) in the ignition switch (22) and the positive lead (20). A trip switch (39) may be provided which is able to be operated by for example movement of the accelerator of the vehicle, the oil pressure switch, the voltage regulator, or some other item with the desired item being the accelerator so that the switch becomes closed as the accelerator is pressed. Switch (39) must be provided to allow for recharging of the battery in use eliminating the need for a diode in the circuit. Lead (24) is the general accessory lead which supplies current to vehicle accessories independent of the ignition switch.

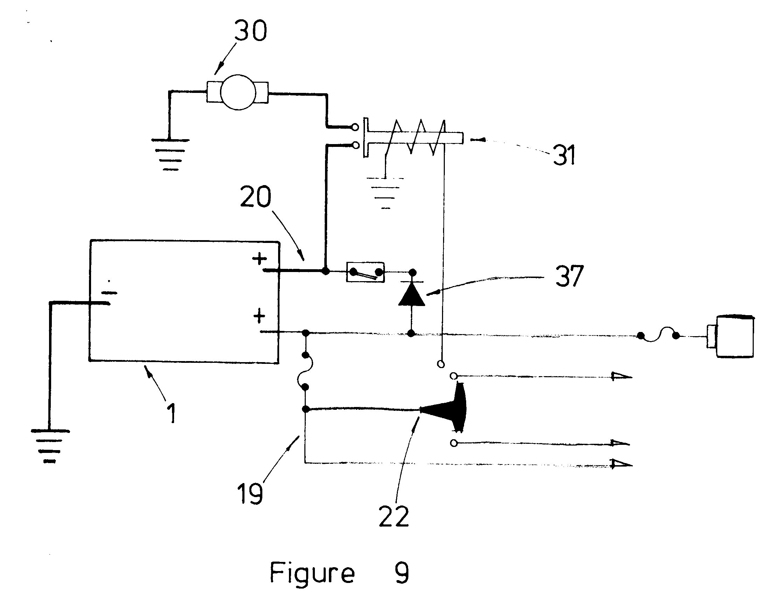

Figure 9 shows the construction of the battery (1) being provided in substantially the same manner along with ignition switch (22) and positive leads (19) and (20). Between the positive leads (19) and (20) is connected a diode (37) which allows for recharging of the two parts of the battery during standard use in substantially the known manner and without the need to provide switch (36) or lead (32) of Figure 8.

Thus it can be seen that at least in the preferred form of the invention, a battery is provided in which by combination of thicker and thinner electrode plates, the thickness determined by more or less layers, arranged in cell structures that share a common earth terminal but have one or more positive terminals, which thereby provide through electrical scheme plan a discharge management capability of said cells and according to a current characteristic which is variable by choice of plate structure thickness.The use of either dry electrolyte or flooded electrolyte or a combination of both is also provided.

## Claims

1. A vehicle electric circuit comprising a battery (1), said battery (1) comprising a container (2) having a plurality of cells (A-L), said plurality of cells (A-L) including at least two positive terminal cells (A, G) and at least one negative terminal cell (L), each cell containing a plurality of alternating positive (10, 13) and negative (11) electrode plates separated from each other and constituting a cell element stack, each of said plates including active material (16), the positive electrode plates (10, 13) of the cell element stack in each positive terminal cell (A, G) being electrically connected to a positive terminal (5, 5a), the negative electrode plates of the cell element stack in the or each negative terminal cell (L) being electrically connected to one negative terminal (4), each electrode plate of each cell element other than a said terminal cell being electrically connected in series to the electrode plate of opposite polarity in an adjoining cell, the cells of each series (A-F; G-L) of connections having separate positive terminals (5, 5a); and an electrolyte in contact with the positive (10, 13) and negative (11) electrode plates in each cell, characterized in that the cells of each series of connections (A-F, G-L) are electrically connected to only one common negative terminal (4) and the electrode plates (10, 11) of the series (A-F) are of thicker plate material than are the electrode plates (11, 13) of the other series (G-L); the electrode plates of the series (A-F) being capable of slower deeper discharge as is required for the vehicle's auxiliary power circuits, the electrode plates of the other series (G-L) are capable of rapid shallow discharge as is required for internal combustion engine starting, said vehicle electric system furthermore comprising first a heavy current conductor cable (18) connected to the battery negative terminal (4) and earthed to said vehicle, second a current conductor cable (20) connected to one or more positive terminals (5, 5a) of said battery and connected to a current first switch (31), said current switch being connected to the electric starter motor (30) of said vehicle, third a current conductor cable (19) connected to one or more of the battery's positive terminals (5, 5a) and to the auxiliary circuits of said vehicle, fourth a current electrical conductor cable connected to one positive terminal not engaged by said second current connector cable (20), said fourth current conductor cable being in common circuit with the generator circuit line of said vehicle, then a second switch (39), fifth a current conductor cable from said second switch (39) connected to said terminal engaged by said second current conductor cable (20).

2. An electrical circuit as claimed in claim 1, wherein said second switch (39) is turned on by depression of the accelerator of said vehicle.

3. An electrical circuit as claimed in claim 1 including a blocking diode (27) between said positive terminals (5, 5a) instead of the second switch (39) with current flow in the direction away from said generator line circuit.

4. An electrical circuit as claimed in claim 1, having a thermal current overload circuit breaking switch (33) between said positive terminals (5, 5a).

5. An electrical circuit as claimed in claim 1, wherein an extra contact is incorporated into the heavy starter motor switch (31), such switch being supplied with current from more than one positive terminal (5, 5a) of said battery (1).

6. An electrical circuit as claimed in claim 1, wherein said electrical system includes an ignition switch (22), and a further terminal (35) is included in said ignition switch (22) which further terminal (35) provides a connection between said positive terminals.

7. An electrical circuit as claimed in claim 1, wherein electrical discharge or recharge of battery cells is determined by operation of pressure sensitive switches such as those used for oil pressure indication.

8. An electrical circuit according to claim 1, wherein the series of cells (A-F) having thicker plate material have less plates per volume space, the current capacity being equal to the other series of cells (G-L) having thinner plates.

9. An electrical circuit according to claim 1, wherein said positive terminals (5, 5a) in the battery (1) are in close proximity.

10. An electrical circuit according to claim 1, wherein at least some of said plates in the battery (1) comprise two or more layers.

11. An electrical circuit according to claim 1, wherein said electrolyte in each battery cell comprises (one of) an absorbed electrolyte (or dry and a flooded electrolyte).

12. An electrical circuit according to claim 1, wherein said battery plates are separated by a separator (13) and said separators are impregnated with electrolyte and placed in dry form.

13. An electrical circuit according to claim 1, wherein each battery layer includes a grid (15), reinforcing material (17) being provided between each layer so that the grid structures within each cell require a minimum or no strengthening additives.

14. An electrical circuit according to claim 1, the battery (1) having venting holes of isotonic design from each cell, said venting holes being covered with teflon to prevent liquid escape but to allow gas escape and/or recombination.

15. An electrical circuit according to claim 1, wherein said electrolyte in each battery cell comprises a dry electrolyte.

16. An electrical circuit according to claim 1, wherein said electrolyte in each battery cell comprises a flooded electrolyte.

## Patentansprüche

1. Elektrische Schaltung für ein Kraftfahrzeug mit einer Batterie (1), welche einen Behälter (2) mit einer Vielzahl von Zellen (A-L) umfasst, wobei diese Vielzahl von Zellen (A-L) mindestens zwei Zellen (A, G) mit positiver Klemme und mindestens eine Zelle (L) mit negativer Klemme umfasst, wobei jede Zelle eine Vielzahl von abwechselnd positiven (10, 13) und negativen (11), voneinander getrennten und einen Zellenelementenstapel bildenden Elektrodenplatten umfasst, jede dieser Platten aktives Material (16) aufweist, die positiven Elektrodenplatten (10, 13) des Zellenelementenstapels in jeder Zelle (A, G) mit positiver Klemme mit einer positiven Klemme (5, 5a) elektrisch verbunden sind, die negativen Elektrodenplatten des Zellenelementenstapels in der oder den Zelle(n) (L) mit negativer Klemme mit einem einzigen negativen Klemme (4) elektrisch verbunden sind, jede Elektrodenplatte jedes Zellenelementes ausser einer dieser Zellen mit Klemme mit der Elektrodenplatte ungleichnamiger Polarität in einer angrenzenden Zelle elektrisch in Reihe geschaltet ist, und die Zellen jeder Reihenschaltung (A-F; G-L) separate positive Klemmen (5, 5a) aufweisen; und mit einem Elektrolyten, der mit den positiven (10, 13) und negativen (11) Elektrodenplatten in jeder Zelle in Kontakt ist, **dadurch gekennzeichnet, dass** die Zellen jeder Reihenschaltung (A-F, G-L) mit nur einer einzigen gemeinsamen negativen Klemme (4) elektrisch verbunden sind und die Elektrodenplatten (10,11) der einen Reihenschaltung (A-F) aus dickerem Plattenmaterial als die Elektrodenplatten (11, 13) der anderen Reihenschaltung (G-L) bestehen; wobei die Elektrodenplatten der einen Reihenschaltung (A-F) einer langsameren, tieferen, für die Hilfsstrom-Versorgungsschaltungen des Kraftfahrzeuges erforderlichen Entladung fähig sind, die Elektrodenplatten der anderen Reihenschaltung (G-L) einer schnellen, unvollständigen, für das Starten eines Verbrennungsmotors erforderlichen Entladung fähig sind, und das elektrische System des Kraftfahrzeugs zudem erstens ein mit der negativen Klemme (4) der Batterie verbundenes und an dem Kraftfahrzeug geerdetes Starkstromleiter-Kabel (18), zweitens ein mit einer oder mehreren positiven Klemmen (5, 5a) der Batterie verbundenes und mit einem ersten Stromschalter (31) verbundenes Stromleiterkabel (20), wobei dieser Stromschalter mit dem Motor (30) des elektrischen Starters des Kraftfahrzeuges verbunden ist, drittens ein mit einer oder mehreren der positiven Klemmen (5, 5a) der Batterie und mit den Hilfsschaltungen des Kraftfahrzeuges verbundenes Stromleiterkabel (19), viertens ein mit einer einzigen positiven Klemme, die nicht durch das zweite Stromleiterkabel (20) belegt ist, verbundenes elektrisches Stromleiterkabel, welches in der gleichen Schaltung liegt wie die Schaltungsleitung der Lichtmaschine des Kraftfahrzeuges, dann einen zweiten Schalter (39), und fünftens ein Stromleiterkabel, welches, von dem zweiten Schalter (39) ausgehend, mit der vom zweiten Stromleiterkabel (20) belegten Klemme verbunden ist, umfasst.

2. Elektrische Schaltung nach Anspruch 1, bei welcher der zweite Schalter (39) durch das Drücken des Gaspedals des Kraftfahrzeuges eingeschaltet wird.

3. Elektrische Schaltung nach Anspruch 1, die zwischen den positiven Klemmen (5, 5a) anstelle des zweiten Schalters (39) eine Sperrdiode (27) mit einer Stromrichtung weg von der Schaltungsleitung der Lichtmaschine enthält.

4. Elektrische Schaltung nach Anspruch 1 mit einem thermischen Überstrom-Schaltungsunterbrechungsschalter (33) zwischen den positiven Klemmen (5, 5a).

5. Elektrische Schaltung nach Anspruch 1, dadurch gekennzeichnet, dass ein weiterer Kontakt in dem Starkstromschalter (31) für den Motor des Starters vorgesehen ist, wobei dieser Schalter von mehr als einer positiven Klemme (5, 5a) der Batterie (1) mit Strom versorgt wird.

6. Elektrische Schaltung nach Anspruch 1, bei welcher das elektrische System einen Zündschalter (22) aufweist und in diesem Zündschalter (22) eine weitere Klemme (35) enthalten ist, wobei diese weitere Klemme eine Verbindung zwischen den positiven Klemmen erstellt.

7. Elektrische Schaltung nach Anspruch 1, bei welcher die elektrische Entladung oder Wiederaufladung der Batteriezellen durch die Betätigung druckempfindlicher Schalter, wie sie für Öldruckanzeige verwendet werden, bestimmt wird.

8. Elektrische Schaltung nach Anspruch 1, bei welcher die Zellenreihe (A-F) mit dickerem Plattenmaterial weniger Platten pro Rauminhalt aufweist, wobei die Strombelastbarkeit gleich derjenigen der anderen Zellenreihe (G-L) mit den dünneren Platten ist.

9. Elektrische Schaltung nach Anspruch 1, bei welcher die positiven Klemmen (5, 5a) in der Batterie (1) in nächster Nähe voneinander angeordnet sind.

10. Elektrische Schaltung nach Anspruch 1, bei welcher wenigstens einige der Platten in der Batterie (1) zwei oder mehr Schichten enthalten.

11. Elektrische Schaltung nach Anspruch 1, bei welcher der Elektrolyt in jeder Batteriezelle entweder einen absorbierten Elektrolyten oder einen trocknen Elektrolyten und einen als Flüssigkeit einzufüllenden Elektrolyten enthält.

12. Elektrische Schaltung nach Anspruch 1, bei welcher die Batterieplatten durch einen Separator (13) getrennt sind, wobei die Separatoren mit Elektrolyten imprägniert sind und in trockenem Zustand eingesetzt werden.

13. Elektrische Schaltung nach Anspruch 1, bei welcher jede Batterieschicht ein Gitter (15) umfasst, wobei zwischen jeder Schicht Verstärkungsmaterial (17) vorgesehen ist, so dass die Gitterstrukturen innerhalb jeder Zelle minimale oder keine Verstärkungszusätze erfordern.

14. Elektrische Schaltung nach Anspruch 1, wobei die Batterie (1) für jede Zelle Belüftungslöcher isotonischer Gestaltung aufweist, wobei diese Belüftungslöcher mit Teflon bedeckt sind, um das Entrinnen von Flüssigkeit zu verhindern und das Entweichen und/oder die Rekombination von Gas zu ermöglichen.

15. Elektrische Schaltung nach Anspruch 1, bei welcher der Elektrolyt in jeder Batteriezelle einen trocknen Elektrolyten umfasst.

16. Elektrische Schaltung nach Anspruch 1, bei welcher der Elektrolyt in jeder Batteriezelle einen als Flüssigkeit einzufüllenden Elektrolyten enthält.

## Revendications

1. Circuit électrique de véhicule comportant un accumulateur (1), cet accumulateur (1) comportant un récipient (2) présentant une pluralité de cellules (A-L), cette pluralité de cellules (A-L) comprenant au moins deux cellules (A, G) de borne positive et au moins une cellule (L) de borne négative, chaque cellule contenant une pluralité de plaques d'électrode positives (10, 13) et négatives (11) en alternance, séparées les unes des autres et constituant un empilement d'éléments de cellule, chacune de ces plaques comportant du matériau actif (16), les plaques d'électrode positives (10, 13) de l'empilement d'éléments de cellule étant, dans chaque cellule (A, G) de borne positive, électriquement connectées à une borne positive (5, 5a), les plaques d'électrode négatives de l'empilement d'éléments de cellule étant, dans la ou chaque cellule (L) de borne négative, électriquement connectées à une unique borne négative (4), chaque plaque d'électrode de chaque élément de cellule autre que l'une de ces cellules de borne étant électriquement connectée en série à la plaque d'électrode de polarité opposée dans une cellule adjacente, les cellules de chaque série de connexions (A-F; G-L) présentant des bornes positives séparées (5, 5a); et un électrolyte en contact avec les plaques d'électrode positives (10, 13) et négatives (11) dans chaque cellule, **caractérisé en ce que** les cellules de chaque série de connexions (A-F; G-L) sont électriquement connectées à une unique borne négative (4) et les plaques d'électrode (10, 11) de l'une des séries (A-F) sont faites en matériau de plaque plus épais que ne le sont les plaques d'électrode (11, 13) de l'autre série (G-L); les plaques d'électrode de la série (A-F) présentant une capacité de décharge lente et profonde comme cela est requis pour les circuits d'alimentation auxiliaire du véhicule, les plaques d'électrode de l'autre série (G-L) présentant une capacité de décharge rapide et peu profonde comme cela est requis pour le démarrage d'un moteur à combustion interne, ce système électrique de véhicule comportant en outre premièrement un câble conducteur (18) de courant fort connecté à la borne négative (4) de l'accumulateur et relié à la masse du véhicule, deuxièmement un câble conducteur de courant (20) connecté à une ou plusieurs bornes positives (5, 5a) de cet accumulateur et connecté à un premier interrupteur de courant (31), cet interrupteur de courant étant connecté au moteur (30) du démarreur électrique de ce véhicule, troisièmement un câble conducteur de courant (19) connecté à une ou plusieurs des bornes positives (5, 5a) de l'accumulateur et aux circuits auxiliaires de ce véhicule, quatrièmement un câble conducteur de courant électrique connecté à une unique borne positive qui n'est pas en engagement avec ce deuxième câble conducteur de courant (20), ce quatrième câble conducteur de courant étant dans le même circuit que la ligne d'alimentation du circuit de génératrice de ce véhicule, puis un deuxième interrupteur (39), cinquièmement un câble conducteur de courant venant de ce deuxième interrupteur (39) et connecté à cette borne qui est en engagement avec ce deuxième câble conducteur de courant (20).

2. Circuit électrique selon la revendication 1, dans lequel ce deuxième interrupteur (39) est fermé par le fait d'appuyer sur l'accélérateur de ce véhicule.

3. Circuit électrique selon la revendication 1 comportant entre ces bornes positives (5, 5a) une diode de blocage (27) au lieu du deuxième interrupteur (39) avec une direction de passage du courant dans le sens qui s'éloigne de cette ligne d'alimentation du circuit de génératrice.

4. Circuit électrique selon la revendication 1, présentant entre ces bornes positives (5, 5a) un thermo-interrupteur (33) d'ouverture de circuit pour le cas de surcharge due au courant.

5. Circuit électrique selon la revendication 1, dans lequel un contact supplémentaire est incorporé à l'interrupteur (31) de courant fort pour le moteur du démarreur électrique, cet interrupteur étant alimenté en courant à partir de plus d'une borne positive (5, 5a) de cet accumulateur (1).

6. Circuit électrique selon la revendication 1, dans lequel ce système électrique comprend un interrupteur d'allumage (22), et une borne supplémentaire (35) est comprise dans cet interrupteur d'allumage (22), cette une borne supplémentaire (35) réalisant une connexion entre ces bornes positives.

7. Circuit électrique selon la revendication 1, dans lequel la décharge électrique ou la recharge des cellules d'accumulateur est déterminée par l'actionnement d'interrupteurs sensibles à la pression tels que ceux qui sont utilisés pour une indication de pression d'huile.

8. Circuit électrique selon la revendication 1, dans lequel la série de cellules (A-F) comportant un matériau de plaque plus épais présente moins de plaques par unité de volume disponible, la capacité en courant étant égale à celle de l'autre série de cellules (G-L) qui présentent des plaques plus minces.

9. Circuit électrique selon la revendication 1, dans lequel ces bornes positives (5, 5a) dans l'accumulateur (1) sont situées en étroite proximité l'une de l'autre.

10. Circuit électrique selon la revendication 1, dans lequel au moins quelques-unes de ces plaques dans l'accumulateur (1) comportent deux couches ou plus.

11. Circuit électrique selon la revendication 1, dans lequel cet électrolyte comprend dans chaque cellule d'accumulateur soit un électrolyte absorbé, soit un électrolyte sec et un électrolyte liquide à y verser.

12. Circuit électrique selon la revendication 1, dans lequel ces plaques d'accumulateur sont séparées par un séparateur (13) et ces séparateurs sont imprégnés d'électrolyte et mis en place sous forme sèche.

13. Circuit électrique selon la revendication 1, dans lequel chaque couche d'accumulateur comporte une grille (15), du matériau de renfort (17) étant prévu entre chaque couche de sorte que les structures de grille au sein de chaque cellule ne requièrent qu'un minimum ou pas du tout d'additifs de renfort.

14. Circuit électrique selon la revendication 1, l'accumulateur (1) présentant des trous de ventilation de conception isotonique pour chaque cellule, ces trous de ventilation étant couverts de Téflon pour empêcher l'échappement de liquide tout en permettant l'échappement et/ou la recombinaison de gaz.

15. Circuit électrique selon la revendication 1, dans lequel cet électrolyte comprend un électrolyte sec dans chaque cellule d'accumulateur.

16. Circuit électrique selon la revendication 1, dans lequel cet électrolyte comprend un électrolyte liquide à verser dans chaque cellule d'accumulateur.
